**Europäisches Patentamt**

**European Patent Office**

**Office européen des brevets**

(11) Veröffentlichungsnummer: **0 189 544 B1**

# EUROPÄISCHE PATENTSCHRIFT

(45) Veröffentlichungstag der Patentschrift: **13.03.91**

(21) Anmeldenummer: **85114874.2**

(22) Anmeldetag: **23.11.85**

(51) Int. Cl.5: **C08L 101/00**, C08L 23/08,
//(C08L101/00,23:08)

(54) Thermoplastische Formmassen.

(30) Priorität: **01.12.84 DE 3443959**

(43) Veröffentlichungstag der Anmeldung:
**06.08.86 Patentblatt 86/32**

(45) Bekanntmachung des Hinweises auf die
Patenterteilung:
**13.03.91 Patentblatt 91/11**

(84) Benannte Vertragsstaaten:
**AT BE DE FR GB NL**

(56) Entgegenhaltungen:
EP-A- 0 013 084
EP-A- 0 083 014
FR-A- 2 183 984
LU-A- 68 975

(73) Patentinhaber: **BASF Aktiengesellschaft
Carl-Bosch-Strasse 38
W-6700 Ludwigshafen(DE)**

(72) Erfinder: **Brandstetter, Franz, Dr.
Ritterbueschel 45
W-6730 Neustadt(DE)**
Erfinder: **Hambrecht, Juergen, Dr.
Werderstrasse 30
W-6900 Heidelberg(DE)**
Erfinder: **Reimann, Horst, Dr.
Adelheidstrasse 26
W-6520 Worms 1(DE)**
Erfinder: **Ziegler, Walter, Dr.
Starenweg 15
W-6803 Edingen-Neckarhausen(DE)**

## Beschreibung

Die Erfindung betrifft thermoplastische Formmassen auf der Grundlage von thermoplasten und Copolymerisaten des Ethylens mit (Meth)-acrylsäurealkylestern.

Thermoplastische Formmassen, die Copolymerisate des Ethylens enthalten, sind beispielsweise in der US-A-3 742 916 beschrieben. Hierbei handelt es sich um eine Kombination von Polyamid mit einem Copolymerisat des Ethylens und tert.-Butyl-(meth)acrylsäureestern. Diese Produkte zeigen eine unbefriedigende thermische Stabilität und merkliche Entmischungstendenzen. Der gleiche Nachteil haftet auch den in der US-A-3 845 163 beschriebenen Mischungen an, die wegen der z.T. als Salz vorliegende Methacrylsäure noch zusätzliche Beeinträchtigungen aufweisen. So fallen bekanntlich die Werte der Kriechstromfestigkeit bei Anwesenheit von Metallionen so stark ab, daß ein Einsatz der Produkte auf dem Elektrosektor nicht möglich ist. Aus der FR-A-2183984 sind Formmassen aus einem Thermoplast und unvernetzten Olefin/Acrylsäureester-Copolymerisaten mit guter Schlagzähigkeit und Haftung bekannt.

Weitere Mischungen von Polyamid mit Copolymerisaten des Ethylens sind u.a. in der DE-B-1 2141 606, US-A-2 713 537, DE-C-2 622 973 und DE-C-3 220 380 offenbart. All diese Produkte verlieren, wenn sie mit chemischen Agenzien in Verbindung kommen, die Zähigkeitseigenschaften.

Des weiteren kennt man aus der DE-C-3 226 427 thermoplastische Formmassen auf der Grundlage von Styrolpolymerisaten und Poly-(phenylenethern), die mit anionisch polymerisierbaren Monomeren modifizierte Copolymerisate des Ethylens mit (Meth)acrylsäureestern enthalten. Auch bei diesen Formmassen tritt ein Verlust der Zähigkeitseigenschaften bei Einwirkung von chemischen Agenzien auf.

Der vorliegenden Erfindung lag daher die Aufgabe zugrunde, thermoplastische Formmassen auf der Grundlage von Thermoplasten und Copolymerisaten des Ethylens zu schaffen, die auch bei Einwirkung von chemischen Agenzien ihre guten Zähigkeitseigenschaften behalten.

Diese Aufgabe wird erfindungsgemäß durch Formmassen gemäß Patentansprüche 1 bis 3 gelöst.

Unter thermoplastischen Formmassen sollen ungeformte Mischungen von thermoplastischen Polymeren verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, können aber auch pulverförmig oder durch Tablettierung vorgeformt oder in Form von Platten und Bahnen vorliegen.

Als thermoplastische Polymere (A) kommen alle thermoplastisch verarbeitbaren Polymeren außer den Polymeren (B) in Frage, wie sie u.a. beispielsweise in der Monographie "Neue polymere Werkstoffe für die industrielle Anwendung, 2. Folge", Verfasser Ellias-Vohwinkel, Verlag Hansa, (1983), München-Wien, beschrieben sind. Besonders hervorzuheben sind hierbei Polypropylen, Polystyrol, Styrol-Acrylnitril-Copolymerisate, ABS, Poly(phenylenether), Polyacrylate, Polyvinylchlorid, Polyamide, Polyacetale, gesättigte Polyester, Polycarbonat, Polysulfone, Polyethersulfone, Polyarylate oder Polyetherketone. Es können auch Mischungen der verschiedenen Thermoplaste verwendet werden, wie beispielsweise ABS/Polyvinylchlorid, ABS/Polycarbonat, Polyphenylenether/Polystyrol, Polybutylenterephthalat/ABS, Polybutylenterephthalat/Polycarbonat/ABS oder Polyamid/Polyphenylenether/Polystyrol.

Die thermoplastischen Formmassen enthalten an thermoplastischen Polymeren (A) 99 bis 50, vorzugsweise 90 bis 70 Gew.%, bezogen auf die Gesamtmischung.

Als Ethylencopolymerisate (B) kommen alle Copolymerisate des Ethylens in Frage, in die auf 100 Mol Ethylen ausschließlich 0,5 bis 30 Mol eines $C_1$- bis $C_8$-Acrylsäure- oder -Methylacrylsäurealkylesters und gegebenenfalls zusätzlich noch bis zu 10 Mol eines weiteren Comonomeren einpolymerisiert sind. Derartige Ethylencopolymerisate sind so bekannt, daß sich eine eingehende Beschreibung erübrigt (vgl. z.B. GB-A-870480, GB-A-900969, US-A-2953551 oder EP-A1-106999). Als bevorzugte $C_1$- bis $C_8$-Alkylester kommen insbesondere Ester mit n-Butanol in Frage. Besonders geeignete weitere Comonomere sind z.B. monoethylenisch ungesättigte Carbonsäuren wie Acrylsäure, in Frage kommen aber auch alle monoethylenisch ungesättigten Verbindungen (vgl. EP-A1-106999).

Die unvernetzten Ethylencopolymerisate haben Schmelzindices von kleiner als 60, bevorzugt 6 bis 60 g/10 min, gemessen nach DIN 53 735 bei 190°C und 2,16 kp. Der Anteil an Ethylencopolymerisaten (B) in den thermoplastischen Formmassen liegt bei 1 bis 50, vorzugsweise bei 10 bis 30 Gew.%, bezogen auf die Gesamtmischung.

Die thermoplastischen Formmassen können durch übliche Zusatzstoffe (C), wie Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füllund Verstärkungsmittel, Keimbildungsmittel, Weichmacher usw. modifiziert werden, die in üblichen Mengen eingesetzt werden.

Erfindungsgemäß sollen die thermoplastischen Formmassen ein Ethylencopolymerisat enthalten, das zu mindestens 30 Gew.% vernetzt ist, d.h. bei dem mindestens 30 Gew.%, bevorzugt 50 bis 100 Gew.%, in Ethylbenzol unlöslich sind. Die Vernetzung des Ethylencopolymerisats kann chemisch durch Zusatz geeigneter Vernetzungsmittel, bevorzugt üblicher Peroxide, bei erhöhten Temperaturen erfolgen. Sie ist an sich bekannt, so daß sich eine weitere Beschreibung erübrigt (vgl. DE-A-34 35 699). Die Bestimmung des Vernetzungsgrads erfolgt durch Extraktion mit Ethylbenzol. Hierzu wird Granulat der thermoplastischen Formmassen 20 Stunden im Soxhlett bei 136°C extrahiert. Nach dem Trocknen des unlöslichen Rückstandes bei 60°C und 1 bar Vakuum 12 Stunden wird der unlösliche Anteil ausgewogen.

Die Herstellung der thermoplastischen Formmassen erfolgt durch Mischen von (A), (B) und gegebenenfalls (C) in der Schmelze. Hierbei verfährt man in bevorzugter Weise so, daß zunächst bei relativ niedrigen Temperaturen eine Dispergierung von (B) in (A) erfolgt. Im Anschluß daran kann die Vernetzung von (B) in Gegenwart eines organischen Peroxids bei höheren Temperaturen erfolgen. Man kann beispielsweise so verfahren, daß in einem Extruder unmittelbar oberhalb des Schmelzpunktes des thermoplastischen Polymeren (A) und des Copolymerisates (B) eine Mischung mit einem geeigneten organischen Peroxid hergestellt wird. Beim weiteren Aufschmelzvorgang in einem Extruder bei deutlich höheren Temperaturen, die von der Zerfallstemperatur des eingesetzten Peroxides abhängt, erfolgt die Vernetzung von (B).

Die mit der Erfindung erzielbaren Vorteile sind insbesondere darin zu sehen, daß neben den bekannten guten Eigenschaften Fertigteile, die aus den erfindungsgemäßen Formmassen hergestellt werden, auch bei Einwirkung von chemischen Reagenzien eine gute Zähigkeit besitzen.

Beispiele

Ein Ethylen-n-Butylacrylat-Acrylsäure-Copolymerisat (86,2/11/2,8 Mol.%) mit einem Schmelzindex von 10 g/10 min wurde mit einem Gew.% Dicumylperoxid in der Schmelze abgemischt. 22 Gewichtsteile dieser Mischung wurden in einem ersten Extruderdurchgang auf einem Zwei-Schnekkenextruder der Firma Werner und Pfleiderer bei 215°C mit 78 Gewichtsteilen Polyamid-6 der relativen Viskosität 3,3 vermischt. In einem zweiten Durchgang bei 300°C wurde die Vernetzung des Ethylencopolymerisates durchgeführt.

Als Vergleich wurde eine weitere Mischung genau so hergestellt, jedoch ohne Zusatz von Dicumylperoxid. Beide Mischungen wurden sofort danach verspritzt und die Zähigkeiten bestimmt. Der Extraktionstest wurde in einem Soxhlett-Extraktor mit Ethylbenzol als Lösungsmittel bei 136°C vorgenommen. Man sieht, daß im Falle des erfindungsgemäßen Thermoplasten nur 0,4 Gew.% an löslichen Anteilen erhalten wurden, was bezogen auf Ethylencopolymerisat (B) besagt, daß 98,2 Gew.% davon vernetzt sind, wogegen im Vergleichsbeispiel 16,2 Gew.% der thermoplastischen Formmassen in Ethylbenzol löslich waren, was bedeutet, daß 26 Gew.% des Ethylencopolymerisates (B) vernetzt sind.

Die erfindungsgemäße Formmasse besitzt eine Kerbschlagzähigkeit von 56 kJ/m², gemessen nach DIN 53 454 und weist eine gute Haftung zu einem Zweikomponentenpolyurethanlack auf, gemessen nach der Gitterschnittprüfung nach DIN 53 151.

Im Gegensatz dazu liegt die Kerbschlagzähigkeit in der nichterfindungsgemäßen Formmasse bei 53 kJ/m² und der Zweikomponentenpolyurethanlack besitzt keine Haftung.

## Ansprüche

1. Thermoplastische Formmassen, enthaltend (A) 99 bis 50 Gew.% thermoplastische Polymere und (B) 1 bis 50 Gew.% eines anderen Polymeren als (A), bestehend aus einem Ethylencopolymerisat, in das auf 100 Mol Ethylen ausschließlich 0,5 bis 30 Mol eines $C_1$- bis $C_8$-(Meth)acrylsäurealkylesters und 0 bis 10 Mol eines weiteren mit Ethylen copolymerisierbaren Monomeren einpolymerisiert sind, sowie - gegebenenfalls -(C) übliche Zusatzstoffe in üblichen Mengen, dadurch gekennzeichnet, daß vom Ethylencopolymerisat (B) mindestens 30 Gew.% vernetzt und in Ethylbenzol unlöslich sind.

2. Thermoplastische Formmassen nach Anspruch 1, dadurch gekennzeichnet , daß vom Ethylencopolymerisat (B) 50 bis 100 Gew.% vernetzt sind.

3. Thermoplastische Formmassen nach Anspruch 1, dadurch gekennzeichnet , daß durch ein organisches Peroxid vernetzt ist.

## Claims

1. A thermoplastic molding composition containing (A) from 99 to 50% by weight of a thermoplastic polymer and (B) from 1 to 50% by weight of a polymer other than (A) comprising an ethylene copolymer containing per 100 mol of ethylene exclusively from 0.5 to 30 mol of a $C_1$-$C_8$-alkyl (meth)acrylate and from 0 to 10 mol of a further ethylene-copolymerizable monomer as copolymerized units, and also - optionally - (C) customary additives in customary amounts, wherein at least 30% by weight of the ethylene copolymer (B) is crosslinked and insoluble in ethylbenzene.

2. A thermoplastic molding composition as claimed in claim 1, wherein from 50 to 100% by weight of the ethylene copolymer (B) is crosslinked.

3. A thermoplastic molding composition as claimed in claim 1, wherein the crosslinking has been effected with an organic peroxide.

**Revendications**

1. Masses à mouler thermoplastiques, contenant (A) de 99 à 50% en poids de polymère thermoplastique, (B) de 1 à 50% en poids d'un polymère différent de (A), constitué par un copolymère d'éthylène dans lequel sont exclusivement contenues en liaison polymère, pour 100 moles d'éthylène, de 0,5 à 30 moles d'un ester alkylique en $C_1$ à $C_8$ d'acide (méth)acrylique et de 0 à 10 moles d'un autre monomère copolymérisable avec l'éthylène, et - éventuellement - (C) des additifs usuels dans les proportions habituelles, caractérisées en ce qu'au moins 30% en poids du copolymère d'éthylène (B) sont réticulés et insolubles dans l'éthylbenzène.

2. Masses à mouler thermoplastiques selon la revendication 1, caractérisées en ce que 50 à 100% en poids du copolymère d'éthylène (B) sont réticulés.

3. Masses à mouler thermoplastiques selon la revendication 1, caractérisées en ce que la réticulation est effectuée par addition d'un peroxyde organique.